# EUROPEAN PATENT APPLICATION

(11) **EP 4 768 794 A1**
(43) Date of publication of application: **01.07.2026**
(21) Application number: 24927462.2
(22) Date of filing: 11.09.2024
(51) Int. Cl.: F24F 1/0076, F24F 8/192, F24F 8/30, F24F 13/28, B01D 53/32

(54) **AIR CONDITIONER AND AIR PURIFIER EMPLOYING ELECTROSTATIC DUST COLLECTOR**

(30) Priority: 26.02.2024 JP 2024026750
(71) Applicant: Samsung Electronics Co., Ltd., Suwon-si, Gyeonggi-do 16677 (KR)
(72) Inventor: KATAOKA, Takuya, Yokohama-shi, Kanagawa 230--0027 (JP); FUKUOKA, Daisuke, Yokohama-shi, Kanagawa 230--0027 (JP); TSUJIMOTO, Kahoru, Yokohama-shi, Kanagawa 230--0027 (JP)
(74) Representative: Walaski, Jan Filip
(86) International application number: PCT/KR2024/013788
(87) International publication number: WO 2025/183289

(57) **Abstract**

An air conditioner includes an electrostatic precipitator. The electrostatic precipitator includes a plurality of charging electrodes including ground electrodes and discharge electrodes and a plurality of dust collection electrodes including collection electrodes and high-voltage electrodes. The discharge electrodes, the ground electrodes, the high-voltage electrodes, and the collection electrodes are installed on approximately a same plane and in a direction approximately parallel to an airflow direction. The high-voltage electrodes and the collection electrodes each include a conductive member surface-treated by a non-conductive member.

## Description

### Technical Field

The disclosure relates to an air conditioner and an air purifier each including an electrostatic precipitator.

### Background Art

Air conditioners and the like include a dust collector to remove dust from air. For example, Japanese Patent No. 3132116 discloses a dust collection part including an ionizer part having an ionization electrode and an ionization plate, and a dust collection electrode that collects dust particles ionized and charged in the ionizer part. The ionizer part and the dust collection electrode are integrated and arranged on a plane perpendicular to the direction of airflow.

Japanese Patent No. 3700455 discloses an electrostatic precipitator including an ionization part that generates a corona discharge between a discharge electrode and an opposite electrode to charge dust in the air, and a collector part that collects dust charged in the ionization part by using a high-voltage electrode and a dust collection electrode. The opposite electrode of the ionization part and the dust collection electrode of the collector part are integrated to form a common electrode. The common electrode is parallel to the airflow. A plurality of common electrodes are arranged in a direction perpendicular to the airflow. The high-voltage electrode of the collector part is disposed between the plurality of common electrodes. The discharge electrode of the ionization part is disposed at the upstream end of the high-voltage electrode so as to face the common electrode. The cross-sectional shape of the high-voltage electrode of the collector part is trapezoidal. A gap between the high-voltage electrode and the dust collection electrode in the collector part gradually narrows along the airflow.

### Disclosure of Invention

### Solution to Problem

An electrostatic precipitator according to an embodiment of the disclosure includes a plurality of charging electrodes configured to generate ions by corona discharge to charge airborne particulate matter and a plurality of dust collection electrodes configured to collect the charged airborne particulate matter by using Coulomb force. The plurality of charging electrodes include ground electrodes and discharge electrodes. The plurality of dust collection electrodes include collection electrodes and high-voltage electrodes. The discharge electrodes, the ground electrodes, the high-voltage electrodes, and the collection electrodes are installed on approximately a same plane and in a direction approximately parallel to an airflow direction. The high-voltage electrodes and the collection electrodes each include a conductive member surface-treated by a non-conductive member.

An air conditioner according to an embodiment of the disclosure includes an indoor heat exchanger configured to perform heat exchange with air sucked in from an air conditioning space, and the electrostatic precipitator configured to remove airborne particulate matter before discharging the air into the air conditioning space.

An air purifier according to an embodiment of the disclosure includes the electrostatic precipitator configured to remove airborne particulate matter before discharging sucked air into an air purifying space.

### Brief Description of Drawings

FIG. 1 is a perspective view illustrating a schematic configuration of an air purification unit according to an embodiment of the disclosure.
FIG. 2 is a schematic configuration diagram of an integrated electrostatic precipitator according to an embodiment of the disclosure.
FIG. 3 illustrates an example of a collection electrode and a high-voltage electrode in the integrated electrostatic precipitator according to an embodiment of the disclosure.
FIG. 4 is a schematic configuration diagram of the integrated electrostatic precipitator according to an embodiment of the disclosure.
FIG. 5a is a diagram illustrating an operation of a two-stage electrostatic precipitator according to a comparative example.
FIG. 5b is a diagram illustrating an operation of an integrated electrostatic precipitator according to the disclosure.
FIG. 6 is a diagram illustrating an example of performance when the integrated electrostatic precipitator according to the disclosure is mounted on an air purifier.
FIG. 7 is a diagram for describing the necessity of forming a collection electrode of the integrated electrostatic precipitator according to the disclosure by surface-treating a conductive member into a non-conductive member.
FIG. 8 is a schematic configuration diagram of an air conditioner according to an embodiment of the disclosure.
FIG. 9 is a schematic configuration diagram of an air purifier according to an embodiment of the disclosure.

### Mode for the Invention

Various embodiments of the disclosure and terms as used therein are not intended to limit the technical features described in the disclosure to specific embodiments and should be understood as including various modifications, equivalents, or alternatives of the embodiments.

In connection with the description of the drawings, like reference numbers may be used to denote like or related elements.

A singular form of a noun corresponding to an item may include one or more items, unless the relevant context clearly indicates otherwise.

In the disclosure, the expressions "A or B," "at least one of A and B," "at least one of A or B," "A, B, or C," "at least one of A, B, and C," and "at least one of A, B, or C" may include any one of the items listed in the corresponding expression or all possible combinations thereof.

The term "and/or" as used herein includes a combination of a plurality of related recited elements or any one of a plurality of related recited elements.

The terms "first," "second," etc. as used herein may be only used to distinguish one element from another and do not limit the elements in any other aspects (e.g., importance or order).

When a certain (e.g., first) element is referred to as being "coupled" or "connected" to another (e.g., second) element with or without the terms "functionally" or "communicatively," it means that the certain element may be coupled or connected to the other element directly (e.g., by wire) or wirelessly or through a third element.

The terms "comprise" or "include" as used herein are inclusive and therefore specify the presence of stated features, integers, steps, operations, elements, components, or combinations thereof, but do not preclude the presence or addition of one or more other features, integers, steps, operations, elements, components, or combinations thereof.

It will be understood that when an element is referred to as being "connected to," "coupled to," "supported to," or "in contact with" another element, the element may be "directly connected to, coupled to, supported to, or in contact with" the other element or may be "indirectly connected to, coupled to, supported to, or in contact with" the other element through a third element.

It will be understood that when an element is referred to as being located "on" another element, the element may be in contact with the other element, and another element may also be present between the two elements.

An air conditioner according to various embodiments of the disclosure is a device that performs functions such as air purification, ventilation, humidity control, cooling, or heating in an air conditioning space (hereinafter referred to as "indoor") and refers to a device having at least one of these functions.

According to an embodiment of the disclosure, the air conditioner may include a heat pump device so as to perform a cooling function or a heating function. The heat pump device may include a refrigeration cycle in which a refrigerant is circulated along a compressor, a first heat exchanger, an expansion device, and a second heat exchanger. All components of the heat pump device may be built into one housing that forms the exterior of the air conditioner, and window fit air conditioners or portable air conditioners are examples of such air conditioners. On the other hand, some components of the heat pump device may be separately built into a plurality of housings that form one air conditioner, and wall-mounted air conditioners, stand-type air conditioners, and system air conditioners are examples of such air conditioners.

An air conditioner including a plurality of housings may include at least one outdoor unit installed outdoors and at least one indoor unit installed indoors. For example, the air conditioner may be configured so that one outdoor unit is connected to one indoor unit through a refrigerant pipe. For example, the air conditioner may be configured so that one outdoor unit is connected to two or more indoor units through a refrigerant pipe. For example, the air conditioner may be configured so that two or more outdoor units are connected to two or more indoor units through a plurality of refrigerant pipes.

The outdoor unit may be electrically connected to the indoor unit. For example, information (or commands) for controlling the air conditioner may be input through an input interface provided in the outdoor unit or the indoor unit, and the outdoor unit and indoor unit may operate simultaneously or sequentially in response to user input.

The air conditioner may include an outdoor heat exchanger provided in the outdoor unit, an indoor heat exchanger provided in the indoor unit, and a refrigerant pipe connecting the outdoor heat exchanger and the indoor heat exchanger to each other.

The outdoor heat exchanger may perform heat exchange between the refrigerant and outdoor air by using the phase change of the refrigerant (e.g., evaporation or condensation). For example, while the refrigerant condenses in the outdoor heat exchanger, the refrigerant may release heat to outdoor air, and while the refrigerant flowing through the outdoor heat exchanger evaporates, the refrigerant may absorb heat from outdoor air.

The indoor unit is provided indoors. For example, the indoor unit may be classified into a ceiling-mounted indoor unit, a stand-type indoor unit, and a wall-mounted indoor unit according to the method of arranging the indoor unit. For example, the ceiling-mounted indoor unit may be classified into a 4-way type indoor unit, a 1-way type indoor unit, a duct type indoor unit, and the like, according to the method of discharging air.

Similarly, the indoor heat exchanger may perform heat exchange between the refrigerant and indoor air by using the phase change of the refrigerant (e.g., evaporation or condensation). For example, while the refrigerant evaporates in the indoor unit, the refrigerant may absorb heat from indoor air, and the indoor space may be cooled by blowing the indoor air cooled while passing through the cooled indoor heat exchanger. In addition, while the refrigerant condenses in the indoor heat exchanger, the refrigerant may release heat to indoor air, and the indoor space may be heated by blowing the indoor air heated while passing through the high-temperature indoor heat exchanger.

That is, the air conditioner performs a cooling or heating function through a phase change process of the refrigerant circulating between the outdoor heat exchanger and the indoor heat exchanger. For the circulation of the refrigerant, the air conditioner may include a compressor that compresses the refrigerant. The compressor may suck in refrigerant gas through a suction port and compress the refrigerant gas. The compressor may discharge high-temperature and high-pressure refrigerant gas through a discharge port. The compressor may be provided inside the outdoor unit.

The refrigerant may circulate through the refrigerant pipe in the order of the compressor, the outdoor heat exchanger, the expansion device, and the indoor heat exchanger, or in the order of the compressor, the indoor heat exchanger, the expansion device, and the outdoor heat exchanger.

For example, when one outdoor unit and one indoor unit are directly connected to each other through a refrigerant pipe in the air conditioner, a refrigerant may be provided to circulate between the one outdoor unit and the one indoor unit through the refrigerant pipe.

For example, when one outdoor unit is connected to two or more indoor units through a refrigerant pipe in the air conditioner, refrigerants may flow into a plurality of indoor units through a plurality of refrigerant pipes branched from the outdoor unit. The refrigerants discharged from the indoor units may be joined and circulated to the outdoor unit. For example, the indoor units may be directly connected in parallel to one outdoor unit through separate refrigerant pipes.

The indoor units may operate independently according to an operation mode set by a user. That is, some indoor units may operate in a cooling mode and other indoor units may operate in a heating mode. At this time, the refrigerant may be selectively introduced into each indoor unit in a high or low pressure state along a circulation path designated through a flow path switching valve to be described below and may be discharged and circulated to the outdoor unit.

For example, when two or more outdoor units and two or more indoor units are connected to each other through a plurality of refrigerant pipes in the air conditioner, refrigerants discharged from the outdoor units may join and flow through a single refrigerant pipe, may branch off again at a certain point, and may flow into the indoor units.

All the outdoor units may be driven or at least some of the outdoor units may not be driven, depending on the operating load according to the operating amount of the indoor units. At this time, the refrigerant may be introduced into the outdoor unit selectively driven through the flow path switching valve and may be then circulated. The air conditioner may include the expansion device so as to reduce the pressure of refrigerant introduced into the heat exchanger. For example, the expansion device may be arranged inside the indoor unit or the outdoor unit, or may be arranged in both the indoor unit and the outdoor unit.

The expansion device may lower the temperature and pressure of the refrigerant by using, for example, a throttling effect. The expansion device may include an orifice capable of reducing the cross-sectional area of the flow path. The temperature and pressure of the refrigerant having passed through the orifice may be lowered.

The expansion device may be implemented as, for example, an electronic expansion valve capable of controlling an opening ratio (the ratio of the cross-sectional area of the flow path of the valve in a partially open state to the cross-sectional area of the flow path of the valve in a fully open state). The amount of refrigerant passing through the expansion device may be controlled depending on the opening ratio of the electronic expansion valve.

The air conditioner may further include a flow path switching valve arranged on a refrigerant circulation flow path. The flow path switching valve may include, for example, a 4-way valve. The flow path switching valve may determine a refrigerant circulation path depending on an operation mode of the indoor unit (e.g., a cooling operation or a heating operation). The flow path switching valve may be connected to a discharge port of the compressor.

The air conditioner may include an accumulator. The accumulator may be connected to a suction portion of the compressor. Low-temperature and low-pressure refrigerant that has been evaporated in the indoor heat exchanger or the outdoor heat exchanger may be introduced into the accumulator.

When the refrigerant, which is a mixture of refrigerant liquid and refrigerant gas, is introduced into the accumulator, the accumulator may separate the refrigerant liquid from the refrigerant gas, and may provide, to the compressor, the refrigerant gas from which the refrigerant liquid has been separated.

An outdoor fan may be provided in the vicinity of the outdoor heat exchanger. The outdoor fan may blow outdoor air to the outdoor heat exchanger so as to promote heat exchange between the refrigerant and the outdoor air.

The outdoor unit of the air conditioner may include at least one outdoor unit sensor. For example, the outdoor unit sensor may include an environmental sensor. The outdoor unit sensor may be arranged at any position inside or outside the outdoor unit. For example, the outdoor unit sensor may include a temperature sensor that detects air temperature around the outdoor unit, a humidity sensor that detects air humidity around the outdoor unit, a refrigerant temperature sensor that detects refrigerant temperature of the refrigerant pipe passing through the outdoor unit, or a refrigerant pressure sensor that detects refrigerant pressure of the refrigerant pipe passing through the outdoor unit.

The outdoor unit of the air conditioner may include an outdoor unit communication module. The outdoor unit communication module may be provided to receive a control signal from a controller of the indoor unit of the air conditioner, which will be described below. The outdoor unit may control the operation of the compressor, the outdoor heat exchanger, the expansion device, the flow path switching valve, the accumulator, or the outdoor fan, based on the control signal received through the outdoor unit communication module. The outdoor unit may transmit a sensing value detected from the outdoor unit sensor to the controller of the indoor unit through the outdoor unit communication module.

The indoor unit of the air conditioner may include a housing, an air blower that circulates air to the inside or outside the housing, and an indoor heat exchanger that exchanges heat with air introduced into the inside of the housing.

The housing may include a suction port. Indoor air may be introduced into the housing through the suction port.

The indoor unit of the air conditioner may include a filter provided to filter out foreign materials in the air introduced into the housing through the suction port.

The housing may include an outlet. Air flowing inside the housing may be discharged to the outside of the housing through the outlet.

The housing of the indoor unit may include an airflow guide that guides the direction of air discharged through the outlet. For example, the airflow guide may include blades located on the outlet. For example, the airflow guide may include an auxiliary fan that regulates discharge airflow. The disclosure is not limited thereto, and the airflow guide may be omitted.

The indoor heat exchanger and the air blower, which are arranged on a flow path connecting the suction port to the outlet, may be provided inside the housing of the indoor unit.

The air blower may include an indoor fan and a fan motor. For example, the indoor fan may include an axial flow fan, a radial flow fan, a cross flow fan, or a centrifugal fan.

The indoor heat exchanger may be arranged between the air blower and the outlet or between the suction port and the air blower. The indoor heat exchanger may absorb heat from air introduced through the suction port or may transfer heat to air introduced through the suction port. The indoor heat exchanger may include heat exchange pipes through which the refrigerant flows, and heat exchange fins in contact with the heat exchange pipes so as to increase a heat transfer area.

The indoor unit of the air conditioner may include a drain tray arranged below the indoor heat exchanger to collect condensate generated in the indoor heat exchanger. The condensate collected in the drain tray may be drained to the outside through a drain hose. The drain tray may be provided to support the indoor heat exchanger.

The indoor unit of the air conditioner may include an input interface. The input interface may include any type of user input means, including a button, a switch, a touch screen, and/or a touch pad. The user may directly input setting data (e.g., desired indoor temperature, operation mode setting for cooling/heating/dehumidification/air purification, outlet selection setting, and/or wind volume setting) through the input interface.

The input interface may also be connected to an external input device. For example, the input interface may be electrically connected to a wired remote controller. The wired remote controller may be installed at a specific position (e.g., a portion of a wall) in an indoor space. The user may input setting data regarding the operation of the air conditioner by operating the wired remote controller. An electrical signal corresponding to the setting data obtained through the wired remote controller may be transmitted to the input interface. In addition, the input interface may include an infrared sensor. The user may remotely input setting data regarding the operation of the air conditioner by using a wireless remote controller. The setting data input through the wireless remote controller may be transmitted to the input interface as an infrared signal.

In addition, the input interface may include a microphone. A user's voice commands may be obtained through the microphone. The microphone may convert the user's voice commands into electrical signals and transmit the converted electrical signals to the indoor unit controller. The indoor unit controller may control the components of the air conditioner to execute functions corresponding to the user's voice commands. The setting data (e.g., desired indoor temperature, operation mode setting for cooling/heating/dehumidification/air purification, outlet selection setting, and/or wind volume setting) obtained through the input interface may be transmitted to the indoor unit controller to be described below. For example, the setting data obtained through the input interface may be transmitted to the outside, i.e., to the outdoor unit or the server, through the indoor unit communication module to be described below.

The indoor unit of the air conditioner may include a power module. The power module may be connected to an external power source to supply power to the components of the indoor unit.

The indoor unit of the air conditioner may include an indoor unit sensor. The indoor unit sensor may be an environmental sensor arranged in a space inside or outside the housing. For example, the indoor unit sensor may include one or more temperature sensors and/or humidity sensors arranged in a predetermined space inside or outside the housing of the indoor unit. For example, the indoor unit sensor may include a refrigerant temperature sensor that senses the temperature of the refrigerant in the refrigerant pipe passing through the indoor unit. For example, the indoor unit sensor may include refrigerant temperature sensors that respectively sense the inlet, middle, and/or outlet temperatures of the refrigerant pipe passing through the indoor heat exchanger.

For example, environmental information sensed by the indoor unit sensor may be transmitted to the indoor unit controller to be described below or may be transmitted to the outside through the indoor unit communication module to be described below.

The indoor unit of the air conditioner may include an indoor unit communication module. The indoor unit communication module may include at least one of a short-range wireless communication module or a long-range wireless communication module. The indoor unit communication module may include at least one antenna that wirelessly communicates with other devices. The outdoor unit may include an outdoor unit communication module. The outdoor unit communication module may include at least one of a short-range wireless communication module or a long-range wireless communication module.

The short-range wireless communication module may include a Bluetooth communication module, a Bluetooth Low Energy (BLE) communication module, a near field communication (NFC) module, a wireless local area network (WLAN) (Wi-Fi) communication module, a ZigBee communication module, an Infrared Data Association (IrDA) communication module, a Wi-Fi Direct (WFD) communication module, an Ultra-Wideband (UWB) communication module, an Ant+ communication module, a microwave (uWave) communication module, and the like, but the disclosure is not limited thereto.

The long-range wireless communication module may include a communication module that performs various types of long-range wireless communication and may include a mobile communication module. The mobile communication module may transmit and receive radio signals to and from at least one of a base station, an external terminal, or a server on a mobile communication network.

The indoor unit communication module may communicate with an external device, such as a server, a mobile device, or other home appliances, through a peripheral access point (AP). The AP may connect a LAN, to which the air conditioner or a user equipment is connected, to a wide area network (WAN), to which the server is connected. The air conditioner or the user equipment may be connected to the server through the WAN. The indoor unit of the air conditioner may include an indoor unit controller that controls components of the indoor unit, including an air blower and the like. The outdoor unit of the air conditioner may include an outdoor unit controller that controls components of the outdoor unit, including a compressor and the like. The indoor unit controller may communicate with the outdoor unit controller through the indoor unit communication module and the outdoor unit communication module. The outdoor unit communication module may transmit a control signal generated by the outdoor unit controller to the indoor unit communication module, or may transmit a control signal transmitted from the indoor unit communication module to the outdoor unit controller. That is, the outdoor unit and indoor unit may perform bidirectional communication. The outdoor unit and the indoor unit may transmit and receive various signals generated during the operation of the air conditioner.

The outdoor unit controller may be electrically connected to the components of the outdoor unit and control the operations of the components of the outdoor unit. For example, the outdoor unit controller may adjust the frequency of the compressor and control the flow path switching valve to switch the refrigerant circulation direction. The outdoor unit controller may control the rotation speed of the outdoor fan. In addition, the outdoor unit controller may generate a control signal for adjusting the opening degree of the expansion valve. Under the control of the outdoor unit controller, the refrigerant may be circulated along a refrigerant circulation circuit including the compressor, the flow path switching valve, the outdoor heat exchanger, the expansion valve, and the indoor heat exchanger.

Various temperature sensors included in the outdoor unit and indoor unit may transmit, to the outdoor unit controller and/or the indoor unit controller, electrical signals corresponding to the sensed temperatures. For example, humidity sensors included in the outdoor unit and indoor unit may transmit, to the outdoor unit controller and/or the indoor unit controller, electrical signals corresponding to the sensed humidity.

The indoor unit controller may obtain user input from a user device, including a mobile device or the like, through the indoor unit communication module and may obtain user input directly through the input interface or through a remote controller. The indoor unit controller may control the components of the indoor unit, including the air blower and the like, in response to the received user input. The indoor unit controller may transmit information about the received user input to the outdoor unit controller of the outdoor unit.

The outdoor unit controller may control the components of the outdoor unit, including the compressor and the like, based on information about the user input received from the indoor unit. For example, when a control signal corresponding to user input of selecting an operation mode, such as a cooling operation, a heating operation, an air blowing operation, a defrosting operation, or a dehumidifying operation, is received from the indoor unit, the outdoor unit controller may control the components of the outdoor unit so that the operation of the air conditioner corresponding to the selected operation mode is performed.

The outdoor unit controller and the indoor unit controller may each include a processor and a memory. The indoor unit controller may include at least one first processor and at least one first memory, and the outdoor unit controller may include at least one second processor and at least one second memory.

The memory may memorize/store various pieces of information necessary for the operation of the air conditioner. The memory may store instructions, applications, data and/or programs necessary for the operation of the air conditioner. For example, the memory may store various programs for the cooling operation, the heating operation, the dehumidifying operation, and/or the defrosting operation of the air conditioner. The memory may include volatile memory, such as static random access memory (SRAM) and dynamic random access memory (DRAM), which temporarily stores data. In addition, the memory may include non-volatile memory, such as read-only memory (ROM), erasable programmable read-only memory (EPROM), and electrically erasable programmable read-only memory (EEPROM), which stores data for long period of time.

The processor may generate control signals for controlling the operation of the air conditioner, based on the instructions, the applications, the data, and/or the programs stored in the memory. The processor is hardware that may include logic circuits and arithmetic circuits. The processor may process data according to the programs and/or instructions provided from the memory and may generate control signals according to a result of the processing. The memory and the processor may be implemented as a single control circuit or a plurality of circuits.

The indoor unit of the air conditioner may include an output interface. The output interface may be electrically connected to the indoor unit controller and may output information related to the operation of the air conditioner under the control of the indoor unit controller. For example, information such as the operation mode, wind direction, wind volume, and temperature selected by user input may be output. In addition, the output interface may output sensing information and warning/error messages obtained from the indoor unit sensor or the outdoor unit sensor.

The output interface may include a display and a speaker. The speaker is an audio device that may output various sounds. The display may display information input by the user or information provided to the user by using various graphic elements. For example, operation information of the air conditioner may be displayed as at least one of an image or text. In addition, the display may include an indicator that provide specific information. The display may include a liquid crystal display (LCD) panel, a light-emitting diode (LED) panel, an organic light-emitting diode (OLED) panel, a micro LED panel, and/or a plurality of LEDs.

The air conditioner may include a dust collector that removes airborne particulate matter before discharging air into an air conditioning space, for example, an indoor space. In addition, an air purifier is a device that sucks in polluted air from an air purifying space, such as an indoor space, purifies the sucked polluted air, and then discharges the purified air back to the indoor space. The air purifier may include various purification devices. The purification device may include a dust collector that removes airborne particulate matter before discharging air into the indoor space.

As an environmental load reduction-type dust collector that does not require disposal or replacement, there is an electrostatic precipitator that collects airborne particulate matter by charging the airborne particulate matter through corona discharge, etc. The charging of the airborne particulate matter involves electric discharge, and thus, a non-uniform electric field is formed. On the other hand, the collection of the airborne particulate matter charged in the charging region does not involve electric discharge, and thus, a uniform electric field is formed. General electrostatic precipitators may be divided into two types according to the electric field. One of them is a single-stage electrostatic precipitator that uses a non-uniform electric field. In the single-stage electrostatic precipitator, a ground electrode opposite to a discharge electrode of a charging portion also functions as a dust collection electrode. Another is a two-stage electrostatic precipitator that uses a uniform electric field and a non-uniform electric field. The two-stage dust collector may include a charger that charges airborne particulate matter by using electric discharge, and a dust collector that collects the discharged airborne particulate matter by using Coulomb force. The airborne particulate matter, which is the target for purification of indoor air, is PM2.5 particulate matter. Because the single-stage electrostatic precipitator has difficulty in increasing the collection efficiency of the airborne particulate matter, the two-stage electrostatic precipitator is mainly used. However, in the two-stage electrostatic precipitator, the charger and the dust collector are arranged as separate units, and thus, there are limitations to the reduction of the thickness of the device and also to the reduction in the price of the device.

The disclosure provides a slim electrostatic precipitator, and an air conditioner and an air purifier each including the same, wherein a charging structure and a dust collection structure where a non-uniform electric field and a uniform electric field for charging and collecting airborne particulate matter due to electric discharge coexist are integrated in a limited space inside an air conditioner or an air purifier. The term "integrated" means not only that the two structures themselves are integrated, but also that both the non-uniform electric field and the uniform electric field exist within a single structure. That is, in the single-stage electrostatic precipitator, only the non-uniform electric field exists within the structure, and in the two-stage electrostatic precipitator, the non-uniform electric field and the uniform electric field are separated even though the structures are integrated. By integrating the charging region and the dust collecting region, the electrostatic precipitator may be made slimmer and the cost reduction may be achieved.

The slim electrostatic precipitator may be achieved by installing the discharge electrode and the ground electrode that generate ions by corona discharge and the high-voltage electrode and the collection electrode that collect dust charged by corona discharge on approximately the same plane. In this case, when the collection electrode is formed of a conductive member and the insulation distance for the voltage applied between the discharge electrode and the collection electrode is not sufficiently secured between the discharge electrode and the collection electrode, a spark discharge occurs between the discharge electrode and the collection electrode, making it difficult to generate a stable discharge between the discharge electrode and the ground electrode.

The disclosure provides an electrostatic precipitator capable of generating a stable discharge between a discharge electrode and a ground electrode, and an air conditioner including the same. The disclosure provides an electrostatic precipitator in which a discharge electrode and a ground electrode that generate ions by corona discharge and a high-voltage electrode and a collection electrode that collect dust charged by corona discharge are installed on substantially the same plane, so that a stable discharge is generated between the discharge electrode and the ground electrode.

The technical problems to be solved by the disclosure are not limited to those described above, and other technical problems that are not mentioned herein will be clearly understood by those of ordinary skill in the art from the following description.

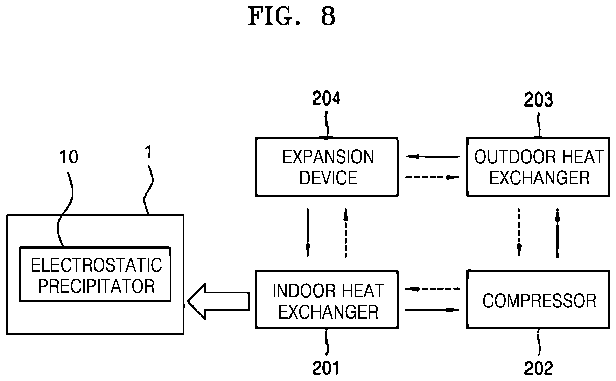

Hereinafter, an electrostatic precipitator, and an air conditioner and an air purifier each including the same according to an embodiment of the disclosure will be described in detail, so that those of ordinary skill in the art may easily carry out the disclosure. However, the disclosure may be implemented in various different forms and is not limited to an embodiment of the disclosure described herein. In order to clearly explain the disclosure, parts irrelevant to the description are omitted in the drawings and similar reference numerals denote similar parts throughout the specification. FIG. 8 is a schematic configuration diagram of an air conditioner according to an embodiment of the disclosure. The air conditioner sucks in air from an air conditioning space (e.g., an indoor space), regulates a temperature of the sucked air, and then discharges the air back into the air conditioning space.

Referring to FIG. 8, the air conditioner may include an indoor heat exchanger 201, a compressor 202, an outdoor heat exchanger 203, and an expansion device 204. The indoor heat exchanger 201, the compressor 202, the outdoor heat exchanger 203, and the expansion device 204 may be connected to each other by refrigerant pipes.

The outdoor heat exchanger 203 may be installed in an outdoor unit and may perform heat exchange between the refrigerant and outdoor air by using the phase change of the refrigerant (e.g., evaporation or condensation). For example, while the refrigerant condenses in the outdoor heat exchanger 203, the refrigerant may release heat to outdoor air, and while the refrigerant flowing through the outdoor heat exchanger 203 evaporates, the refrigerant may absorb heat from outdoor air.

The indoor heat exchanger 201 may perform heat exchange with air sucked in from the air conditioning space. The indoor heat exchanger 201 may be installed in an indoor unit and may perform heat exchange between the refrigerant and indoor air by using the phase change of the refrigerant (e.g., evaporation or condensation). For example, while the refrigerant evaporates in the indoor heat exchanger 201, the refrigerant may absorb heat from indoor air, and the indoor space may be cooled by blowing the indoor air cooled while passing through the indoor heat exchanger 201. In addition, while the refrigerant condenses in the indoor heat exchanger 201, the refrigerant may release heat to indoor air, and the indoor space may be heated by blowing the indoor air heated while passing through the indoor heat exchanger 201.

The compressor 202 may compress refrigerant gas between the indoor heat exchanger 201 and the outdoor heat exchanger 203. The expansion device 204 may lower the pressure of the refrigerant between the indoor heat exchanger 201 and the outdoor heat exchanger 203. In a cooling mode, the refrigerant may circulate in the order of the compressor 202, the outdoor heat exchanger 203, the expansion device 204, and the indoor heat exchanger 201, the outdoor heat exchanger 203 may function as a condenser, and the indoor heat exchanger 201 may function as an evaporator. In a heating mode, the refrigerant may circulate in the order of the compressor 202, the indoor heat exchanger 201, the expansion device 204, and the outdoor heat exchanger 203, the outdoor heat exchanger 203 may function as an evaporator, and the indoor heat exchanger 201 may function as a condenser.

The air conditioner may include an electrostatic precipitator 10 that removes airborne particulate matter (e.g., dust, etc.) before air sucked from the air conditioning space is discharged to the air conditioning space (e.g., an indoor space). The electrostatic precipitator 10 is described in detail below. The electrostatic precipitator 10 may be arranged between an air suction port and an air outlet of the air conditioner, either alone or in the form of an air purification unit 1.

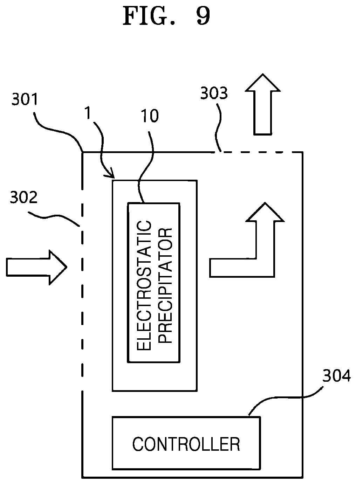

The air purifier is a device that sucks in polluted air, purifies the sucked air, and then discharges the purified air. FIG. 9 is a schematic configuration diagram of an air purifier according to an embodiment of the disclosure. Referring to FIG. 9, the air purifier may include a housing 301. The housing 301 may form an airflow path. The housing 301 may function as, for example, a duct. The housing 301 may include an air suction port 302 and an air outlet 303. Air may be sucked into the housing 301 through the air suction port 302 and discharged from the housing 301 through the air outlet 303.

An electrostatic precipitator 10 may be arranged inside the housing 301. The electrostatic precipitator 10 may remove airborne particulate matter (e.g., dust, etc.) before the sucked air is discharged from the housing 301 to the air purifying space. The electrostatic precipitator 10 is described in detail below. The electrostatic precipitator 10 may be arranged between the air suction port 302 and the air outlet 303 of the air purifier, either alone or in the form of an air purification unit 1.

In FIG. 9, the air suction port 302 is illustrated as being provided on the front side of the housing 301, but the disclosure is not limited thereto, and the air suction port 302 may also be provided on the upper side, the lateral side, etc. of the housing 301. In addition, in FIG. 9, the air outlet 303 is illustrated as being provided on the upper side of the housing 301, but the disclosure is not limited thereto, and the air outlet 303 may also be provided across the upper side and the rear side of the housing 301. Although not illustrated, the air purifier may further include an air blower that generates airflow.

The controller 304 may control the operation of the air purifier. The controller 304 may include a processor and a memory. The memory may memorize/store various pieces of information necessary for the operation of the air purifier. The processor may generate control signals for controlling the operation of the air purifier, based on data and/or the programs stored in the memory. The memory and the processor may be implemented as a single control circuit or a plurality of circuits. For example, the controller 304 may include an operation control circuit that controls the operation of the air purifier, a user interface including an input interface that receives user input and an output interface that displays a control state, a motor control circuit that controls an air blower, a power control module, and the like.

Although not illustrated, the air purifier may include one or more functional filters. Examples of the functional filters may include a deodorizing filter that removes odors, volatile organic compounds (VOCs), etc., and a biofilter that removes biological materials, such as viruses and bacteria.

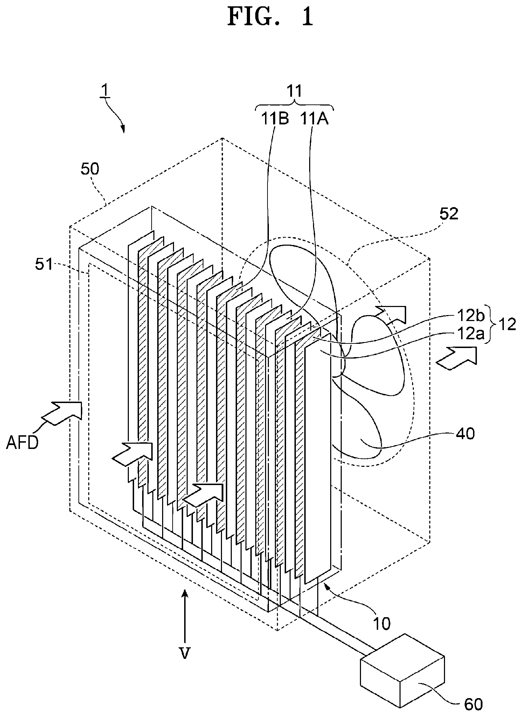

FIG. 1 is a perspective view illustrating a schematic configuration of an air purification unit 1 according to an embodiment of the disclosure. Referring to FIG. 1, the air purification unit 1 may include an electrostatic precipitator 10, a fan (40), a case 50 that accommodates the electrostatic precipitator 10 and the fan 40, and a high-voltage power source 60 that supplies a high voltage to the electrostatic precipitator 10. In FIG. 1, the case 50 is illustrated with a broken line so that a configuration of the electrostatic precipitator 10 installed inside the case 50 is visible.

The electrostatic precipitator 10 may be in the form of a replaceable module. An arrow mark AFD indicates the direction of airflow (ventilation direction) to be treated. The fan 40 may form airflow passing through the electrostatic precipitator 10. For example, the fan 40 may be installed on the downstream side, i.e., the leeward side, of the electrostatic precipitator 10 with respect to the ventilation direction AFD.

In the electrostatic precipitator 10, a charging region where airborne particulate matter is charged and a dust collecting region where the airborne particulate matter charged in the charging region is collected may be integrated. The electrostatic precipitator 10 may include a plurality of charging electrodes 11 that generate ions by corona discharge to charge airborne particulate matter and a plurality of dust collection electrodes 12 that collect airborne particulate matter charged by ions by using Coulomb force. The charging electrodes 11 may include at least one ground electrode 11A and at least one discharge electrode 11B. The dust collection electrodes 12 may include at least one collection electrode 12a and at least one high-voltage electrode 12b. The ground electrode 11A, the discharge electrode 11B, the collection electrode 12a, and the high-voltage electrode 12b are described in detail below. Hereinafter, the ground electrode 11A, the discharge electrode 11B, the collection electrode 12a, and the high-voltage electrode 12b may be respectively denoted by "A," "B," "a," and "b."

The case 50 may include a resin material, such as acrylonitrile butadiene styrene (ABS) copolymer. In the case 50, an entrance portion 51 may be provided on the upstream side (windward side) and an exit portion 52 may be provided on the downstream side (leeward side), with respect to the ventilation direction AFD. A mesh, a net, a grid, or the like may be installed at the entrance portion 51. The mesh or the like installed at the entrance portion 51 may have a structure that prevents a user from coming into contact with the electrostatic precipitator 10 and has a low airflow resistance. A prefilter that prevents the intrusion of large particles may be installed at the entrance portion 51.

The fan 40 may be arranged at the exit portion 52 of the case 50. Air enters the case 50 through the entrance portion 51 of the case 50, passes through the electrostatic precipitator 10, and is then discharged from the case 50 through the exit portion 52.

The high-voltage power source 60 may generate electric discharge, i.e., corona discharge, between the ground electrode 11A and the discharge electrode 11B by applying a direct current (DC) high voltage between the ground electrode 11A and the discharge electrode 11B. As ions generated by the corona discharge attach to the airborne particulate matter, the airborne particulate matter may be charged. That is, the airborne particulate matter has electric charge. The high-voltage power source 60 may apply the DC high voltage between the collection electrode 12a and the high-voltage electrode 12b. The airborne particulate matter charged by corona discharge may be attached to the surface of the collection electrode 12a by electrostatic force, i.e., Coulomb force. Due to this, the airborne particulate matter may be collected in the electrostatic precipitator 10.

Although not necessarily limited thereto, the high-voltage power source 60 may also apply a common high voltage between the ground electrode 11A and the discharge electrode 11B and between the collection electrode 12a and the high-voltage electrode 12b. Although the embodiment illustrated in FIG. 1 shows that the high-voltage power source 60 is not included in the electrostatic precipitator 10, the high-voltage power source 60 may be included in the electrostatic precipitator 10.

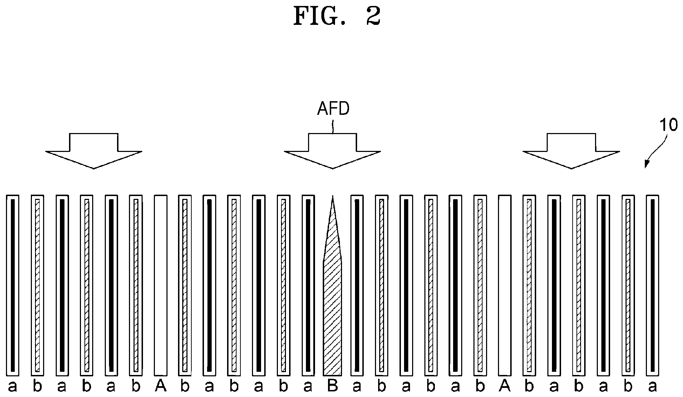

FIG. 2 is a schematic configuration diagram of an integrated electrostatic precipitator 10 according to an embodiment (a first embodiment) of the disclosure. FIG. 2 is a cross-sectional view of the electrostatic precipitator 10 illustrated in FIG. 1, when viewed from viewpoint V. Referring to FIG. 2, the electrostatic precipitator 10 according to the present embodiment of the disclosure may include a ground electrode A and a discharge electrode B as charging electrodes and may include a collection electrode a and a high-voltage electrode b as dust collection electrodes.

The ground electrode A is an electrode used to define the ground potential in the charging region and is maintained at the ground potential. The ground electrode A may include at least one of a flat plate-shaped member or a rod-shaped conductive member. The discharge electrode B is an electrode that generates ions by corona discharge so as to charge airborne particulate matter, and a high voltage is applied to the discharge electrode B. The discharge electrode B may include at least one of a needle-shaped conductive member, a saw-toothed conductive member, or a plurality of fiber-shaped conductive members. The collection electrode a and the high-voltage electrode b are electrodes for collecting charged airborne particulate matter by Coulomb force.

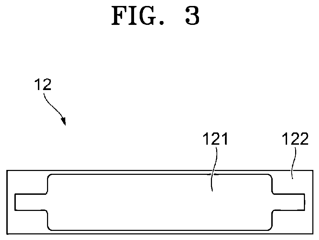

FIG. 3 illustrates an example of the collection electrode a and the high-voltage electrode b in the integrated electrostatic precipitator according to an embodiment of the disclosure. Referring to FIG. 3, the collection electrode a and the high-voltage electrode b may include a conductive member 121 surface-treated by a non-conductive member 122. The ends of the collection electrode a and the high-voltage electrode b may have a structure in which the conductive member 121 is exposed. A voltage may be applied to the high-voltage electrode b and the collection electrode a may be grounded, through the exposed portion of the conductive member 121. The conductive member 121 may include metal, carbon, etc., and the non-conductive member 122 may include a resin film, such as polyethylene-terephthalate (PET), or an inorganic material film. As the surface treatment, for example, coating or laminating may be applied.

In the electrostatic precipitator 10 of FIG. 2 according to an embodiment of the disclosure, the ground electrode A, the discharge electrode B, the collection electrode a, and the high-voltage electrode b may be installed on approximately the same plane and in a direction approximately parallel to the ventilation direction AFD. Accordingly, because the electrostatic precipitator 10 according to an embodiment of the disclosure, which has a structure in which the charging region and the dust collecting region are combined and integrated and the electrodes are installed on the same plane, the electrostatic precipitator 10 and the air purification unit 1 including the same may be made slim. In the electrostatic precipitator 10 of FIG. 2 according to an embodiment of the disclosure, the ground electrode A, the discharge electrode B, the collection electrode a, and the high-voltage electrode b may be arranged along a direction perpendicular to the ventilation direction AFD. The ground electrode A, the discharge electrode B, the collection electrode a, and the high-voltage electrode b may be arranged so that the spaces between two adjacent electrodes allow airflow to pass therethrough. That is, the two adjacent electrodes may be spaced apart from each other in a direction perpendicular to the ventilation direction AFD to allow airflow to pass therethrough.

The arrangement of the ground electrode A, the discharge electrode B, the collection electrode a, and the high-voltage electrode b is not limited to the arrangement of FIG. 2. The ground electrode A, the discharge electrode B, the collection electrode a, and the high-voltage electrode b may be arranged to satisfy first and second rules to be described below.

The first rule is a rule regarding the arrangement order of a plurality of charging electrodes including at least one ground electrode A and at least one discharge electrode B. Specifically, the first rule is a rule in which "a plurality of charging electrodes are arranged at a certain interval (a first interval) and any two charging electrodes adjacent to each other among the charging electrodes are a ground electrode A and a discharge electrode B or two ground electrodes A." In other words, in accordance with the first rule, any two adjacent charging electrodes among the charging electrodes are not two discharge electrodes B. Hereinafter, when indicating the arrangement of the electrodes, the symbol "..." indicates an arbitrary arrangement of the collection electrodes a and the high-voltage electrodes b.

In accordance with the first rule, the ground electrodes A and the discharge electrodes B may be arranged as, for example, "...-A-...-B-...-A-...-B-...-A-..." The charging electrodes do not necessarily have to be arranged in the order of the ground electrode A, the discharge electrode B, the ground electrode A, the discharge electrode B. That is, in accordance with the first rule, the ground electrodes A and the discharge electrodes B may be arranged as, for example, "...-A-...-B-...-A-...-A-...-B-...-A-..." On the other hand, in accordance with the first rule, the charging electrodes are not arranged so that two adjacent charging electrodes are two discharge electrodes B, and thus, the ground electrodes A and the discharge electrodes B are not arranged as, for example, "...-A-...-B-...-B-...-A-...".

The second rule is a rule regarding the arrangement order of a plurality of charging electrodes and a plurality of dust collection electrodes including at least one collection electrode a and at least one high-voltage electrode b. Specifically, the second rule is a rule in which "in all a plurality of ranges defined by a plurality of charging electrodes, at least one collection electrode a and at least one high-voltage electrode b are arranged at a narrower interval (a second interval) than the certain interval (the first interval) so that the high-voltage electrode b is not adjacent to the discharge electrode B." The range includes a range between two charging electrodes and a range outside the charging electrodes arranged at both ends in the arrangement direction of the charging electrodes.

In accordance with the second rule, the ground electrodes A, the discharge electrodes B, the collection electrodes a, and the high-voltage electrodes b may be arranged as, for example, "...-A-b-a-b-a-B-a-b-a-b-A-b-a-b-a-B-a-b-a-b-A-..." In accordance with the second rule, the ground electrodes A, the discharge electrodes B, the collection electrodes a, and the high-voltage electrodes b may be arranged as, for example, "...-A-b-a-b-a-B-a-b-a-b-A-b-a-b-A-b-a-b-a-B-a-b-a-b-A-..."

In addition, the ground electrodes A and the discharge electrodes B do not necessarily have to be arranged alternately. Similarly, the collection electrodes a and the high-voltage electrodes b do not necessarily have to be arranged alternately. That is, in accordance with the second rule, the ground electrodes A, the discharge electrodes B, the collection electrodes a, and the high-voltage electrodes b may be arranged as, for example, "...-A-a-b-a-b-a-B-a-b-a-b-a-A-a-b-a-b-a-B-a-b-a-b-a-A-..." Alternatively, the ground electrodes A, the discharge electrodes B, the collection electrodes a, and the high-voltage electrodes b may be arranged as, for example, "...-A-a-b-a-b-a-B-a-b-a-b-a-A-a-b-a-b-a-A-a-b-a-b-a-B-a-b-a-b-a-A-..."

On the other hand, in accordance with the second rule, the ground electrodes A, the discharge electrodes B, the collection electrodes a, and the high-voltage electrodes b are not arranged so that two adjacent electrodes are the discharge electrode B and the high-voltage electrode b, or two high-voltage electrodes b. That is, in accordance with the second rule, the ground electrodes A, the discharge electrodes B, the collection electrodes a, and the high-voltage electrodes b are not arranged as, for example, "...-A-a-b-a-b-B-a-b-a-b-A-a-b-a-b-B-a-b-a-b-A-..." Also, the ground electrodes A, the discharge electrodes B, the collection electrodes a, and the high-voltage electrodes b are not arranged as, for example, "...-A-a-b-a-b-B-a-b-a-b-A-a-b-a-b-A-a-b-a-b-B-a-b-a-b-A-..."

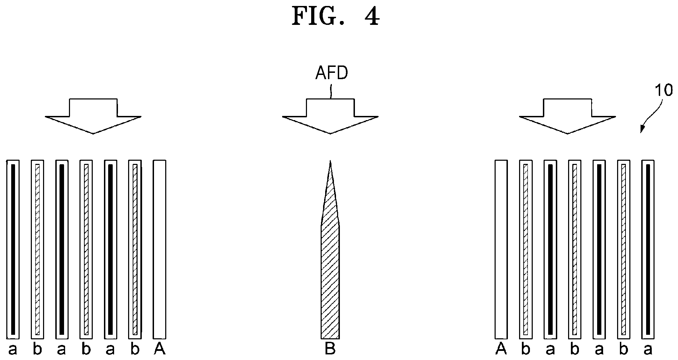

FIG. 4 is a schematic configuration diagram of an integrated electrostatic precipitator 10 according to an embodiment (a second embodiment) of the disclosure. FIG. 4 is a cross-sectional view of the electrostatic precipitator 10 illustrated in FIG. 1, when viewed from viewpoint V. Referring to FIG. 4, the electrostatic precipitator 10 according to an embodiment of the disclosure may include a ground electrode A and a discharge electrode B as charging electrodes and may include a collection electrode a and a high-voltage electrode b as dust collection electrodes. Because the ground electrode A, the discharge electrode B, the collection electrode a, and the high-voltage electrode b are the same as those described with reference to FIGS. 2 and 3, redundant descriptions thereof are omitted.

In the electrostatic precipitator 10 according to the present embodiment of the disclosure, the ground electrode A, the discharge electrode B, the collection electrode a, and the high-voltage electrode b may be installed on approximately the same plane and in a direction approximately parallel to the ventilation direction AFD. The electrostatic precipitator 10 according to the present embodiment of the disclosure differs from the electrostatic precipitator 10 of FIG. 2 according to the first embodiment of the disclosure, in that the collection electrode a and the high-voltage electrode b arranged in a plurality of ranges between the ground electrode A and the discharge electrode B are partially removed in order to expand the discharge space of the charging region. In the electrostatic precipitator (10) according to the present embodiment of the disclosure, the ground electrode A, the discharge electrode B, the collection electrode a, and the high-voltage electrode b are arranged so that airflow may pass through all the spaces between two adjacent electrodes.

The arrangement order of the ground electrode A, the discharge electrode B, the collection electrode a, and the high-voltage electrode b is not limited to the arrangement order illustrated in FIG. 4. The ground electrode A, the discharge electrode B, the collection electrode a, and the high-voltage electrode b may be arranged to satisfy a rule to be described below.

This rule is a rule regarding the arrangement order of a plurality of charging electrodes and a plurality of dust collection electrodes including at least one collection electrode a and at least one high-voltage electrode b. Specifically, this rule is a rule in which "in at least one of a plurality of ranges defined by a plurality of charging electrodes, at least one high-voltage electrode b and at least one collection electrode a are arranged at a narrower interval (a second interval) than a certain interval (a first interval) so that the high-voltage electrode b is not adjacent to the discharge electrode B." The range includes a range between two charging electrodes and a range outside the charging electrodes arranged at both ends in the arrangement direction of the charging electrodes. The at least one range does not include a range between the discharge electrode and one ground electrode adjacent to the discharge electrode and a range between the discharge electrode and another ground electrode adjacent to the discharge electrode. That is, in two adjacent ranges among the plurality of ranges, the high-voltage electrode b and the collection electrode a are arranged only in one of the two ranges. In other words, the collection electrode a and the high-voltage electrode b are not arranged in two consecutive ranges.

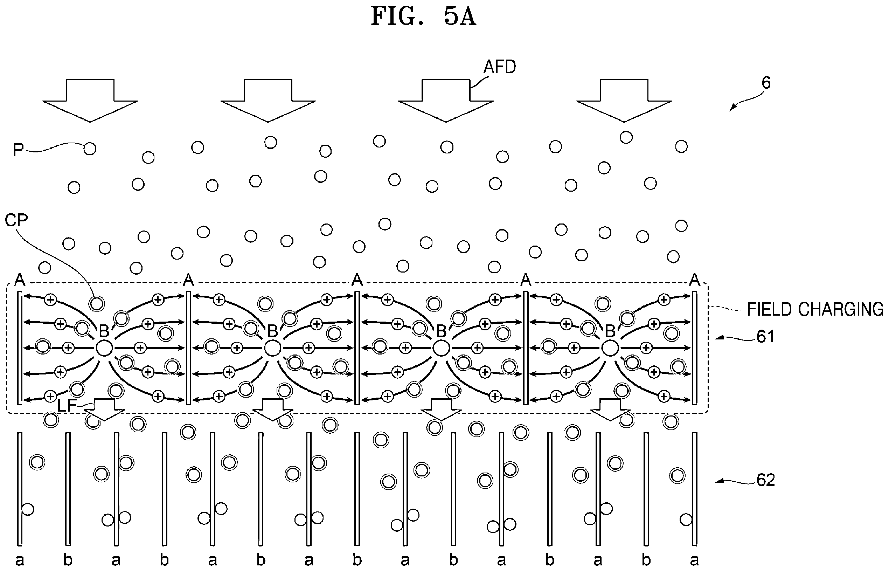

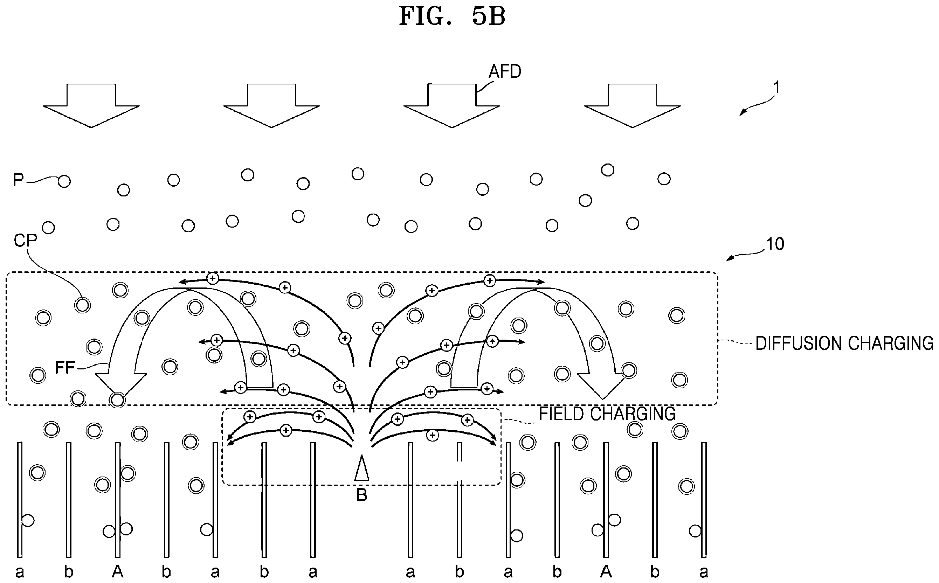

FIG. 5a is a diagram illustrating an operation of a two-stage electrostatic precipitator 6 according to a comparative example. FIG. 5b is a diagram illustrating an operation of an integrated electrostatic precipitator 10 according to an embodiment (a first embodiment) of the disclosure.

Referring to FIG. 5a, in the two-stage electrostatic precipitator 6 according to the comparative example, a charging portion 61 including a ground electrode A and a discharge electrode B and a collection portion 62 including a collection electrode a and a high-voltage electrode b are spaced apart from each other in a ventilation direction AFD. That is, the collection portion 62 may be arranged downstream of the charging portion 61. In the charging portion 61, ions are generated by corona discharge between, for example, the discharge electrode B formed of a wire and the ground electrode A, and airborne particulate matter P is charged by field charging. Charged particulate matter CP, which are the charged airborne particulate matter, may flow downstream due to a straight flow indicated by an arrow LF. In the dust collector 62, the charged particulate matter CP is attracted in the direction of the electric field by the Coulomb force generated by the high voltage applied between the collection electrode a and the high-voltage electrode b and is then collected on the collection electrode a.

Referring to FIG. 5b, in the electrostatic precipitator 10 according to an embodiment (a first embodiment) of the disclosure, ions are generated by corona discharge between a discharge electrode B and a ground electrode A, and airborne particulate matter P is charged by field charging and diffusion charging. Charged particulate matter CP, which is the charged airborne particulate matter, flows downstream by fountain flow as indicated by an arrow FF. The charged particulate matter CP is collected on a collection electrode a by the Coulomb force generated by a high voltage applied between the collection electrode a and a high-voltage electrode b.

According to the electrostatic precipitator 10 according to the disclosure, the airborne particulate matter is charged by using diffusion charging as well as field charging in the charging region, and thus, the amount of charge of the airborne particulate matter may be increased and ions are released spatially. Therefore, the airborne particulate matter P may be collected by fountain flow even by a structure in which the charging region is arranged on the same plane as the dust collecting region.

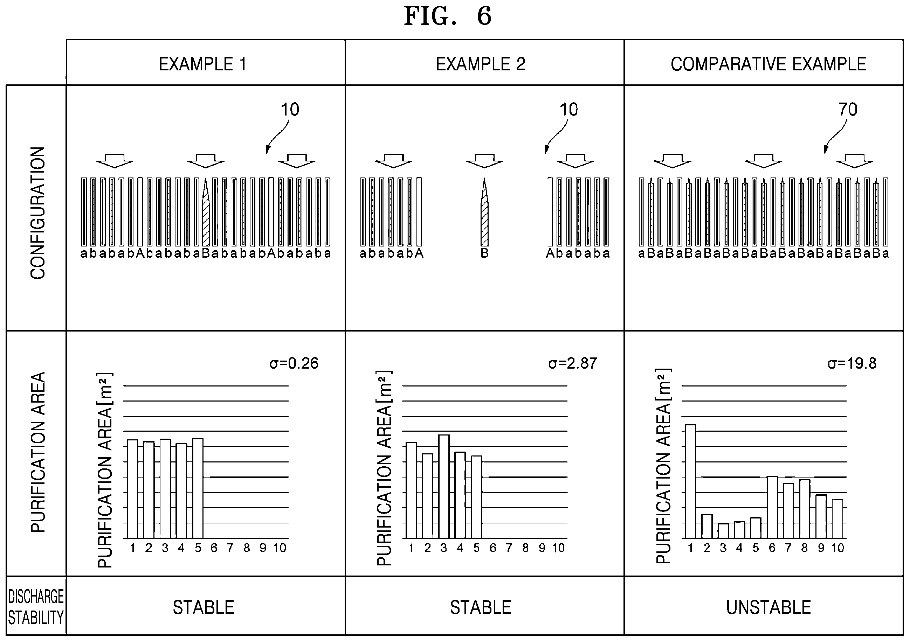

FIG. 6 is a diagram illustrating an example of performance when the integrated electrostatic precipitator 10 according to the disclosure is mounted on an air purifier.

Example 1 is a case where the electrostatic precipitator 10 according to the first embodiment of the disclosure described with reference to FIG. 2 is employed. That is, Example 1 is an example of a case where the air purification unit 1 having the electrostatic precipitator 10 according to the first embodiment of the disclosure, in which the charging region and the dust collecting region are integrated and thus the charging region and the dust collecting region are not structurally separated, is mounted on the air purifier. Example 2 is a case where the electrostatic precipitator 10 according to the second embodiment of the disclosure described with reference to FIG. 4 is employed. That is, Example 2 is an example of a case where the air purification unit 1 having the electrostatic precipitator 10 according to the second embodiment of the disclosure, in which the charging region and the dust collecting region are integrated but the charging region and the dust collecting region are separated, is mounted on the air purifier. On the other hand, a comparative example is an example of a case where an electrostatic precipitator 70 that enables integrated molding by exposing a portion of a high-voltage electrode b in a dust collecting region so that the high-voltage electrode b also serves as a discharge electrode B is mounted on an air purifier. Accordingly, the electrostatic precipitator 70 according to the comparative example has a structure in which the collection electrode a and the discharge electrode B that also serves as the high-voltage electrode b are arranged alternately.

Referring to FIG. 6, in the air purifier including the electrostatic precipitator 10 of Example 1 and the air purifier including the electrostatic precipitator 10 of Example 2, the gap in the purification area between experimental rounds is small. Accordingly, it is confirmed that a stable discharge may be generated by using the electrostatic precipitator 10 according to the disclosure. On the other hand, in the air purifier including the electrostatic precipitator 70 according to the comparative example, the non-uniformity of the purification area for each experimental round is large. This is because the stability of electric discharge is lower in the electrostatic precipitator 70 of the comparative example than in the electrostatic precipitator 10 of the disclosure.

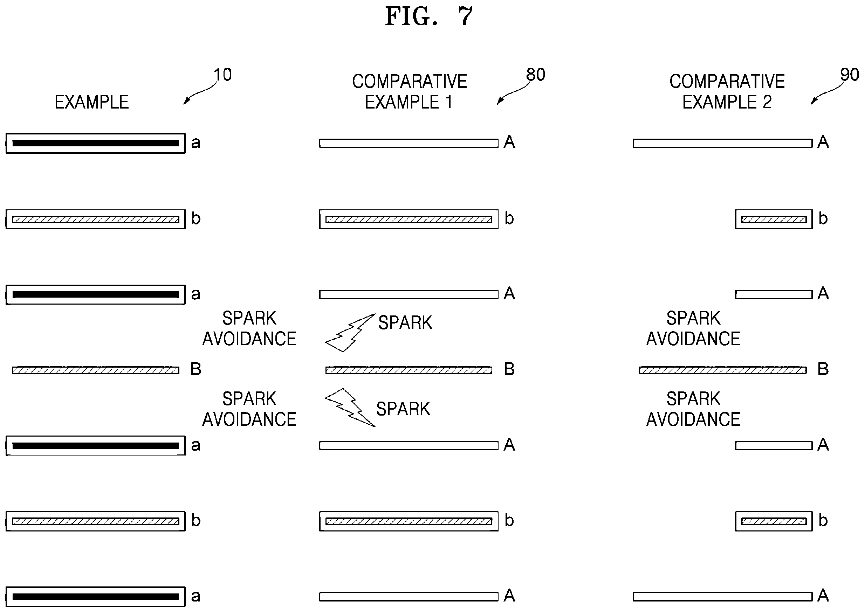

FIG. 7 is a diagram for describing the necessity of forming the collection electrode a of the integrated electrostatic precipitator 10 according to the disclosure by surface-treating a conductive member into a non-conductive member. Referring to FIG. 7, in the electrostatic precipitator 10 of Example 1, a conductive member 121 surface-treated by a non-conductive member 122 is applied as the collection electrode a, as illustrated in FIG. 3. In an electrostatic precipitator 80 according to a first comparative example, a conductive member 121, to which a non-conductive member 122 is not applied, is applied as a collection electrode. In other words, the electrostatic precipitator 80 according to the first comparative example has a structure in which the collection electrode a of the electrostatic precipitator 10 according to the embodiment of the disclosure is replaced with the ground electrode A. In this case, because a spark discharge may occur between the discharge electrode B and the ground electrode A, it is impossible to apply to the electrodes of the electrostatic precipitator 80 a high voltage equivalent to the high voltage applied to the electrodes of the electrostatic precipitator 10 according to the embodiment of the disclosure while arranging a plurality of electrodes of the electrostatic precipitator 80 at the same arrangement interval as the electrodes of the electrostatic precipitator 10 according to the embodiment of the disclosure.

In order to avoid a spark discharge without changing the arrangement interval between the electrodes, a method of reducing the length of the ground electrode A as in an electrostatic precipitator 90 according to a second comparative example may be considered. In other words, the electrostatic precipitator 90 according to the second comparative example has a structure in which the length of the ground electrode A adjacent to the discharge electrode B is shortened in the electrostatic precipitator 80 according to the first embodiment of the disclosure. With this configuration, the dust collection effect may be reduced because the length of some electrodes is short.

In the electrostatic precipitator 10 according to the embodiment of the disclosure, an electrode in which the conductive member 121 is surface-treated with the non-conductive member 122 is used as the collection electrode a. Accordingly, a spark discharge may be avoided without changing the arrangement interval between the electrodes, and thus, the reduction in dust collection effect may be suppressed.

As described above, in the electrostatic precipitator 10 according to the disclosure, the ground electrode 11A and the discharge electrode 11B for forming the non-uniform electric field are arranged in a portion of the uniform electric field of the dust collection region where the collection electrode 12a and the high-voltage electrode 12b are alternately arranged, and thus, the charging region and the dust collecting region are formed on approximately the same plane. In addition, an electrode in which the conductive member is surface-treated with the non-conductive member is used as the collection electrode 12a and the high-voltage electrode 12b. Due to this, a spark discharge may be avoided even when the collection electrode 12a and the high-voltage electrode 12b are arranged adjacent to the discharge electrode 11B, and a stable discharge may be generated between the discharge electrode 11B and the ground electrode 11A defining the ground potential. As a result, the reduction in the collection area is prevented and the dust collection efficiency may be maintained.

An air conditioner according to an aspect of the disclosure includes an indoor heat exchanger configured to perform heat exchange with air sucked in from an air conditioning space, and an electrostatic precipitator configured to remove airborne particulate matter before discharging the air into the air conditioning space. The electrostatic precipitator include a plurality of charging electrodes including ground electrodes and discharge electrodes and configured to generate ions by corona discharge to charge the airborne particulate matter and a plurality of dust collection electrodes including collection electrodes and high-voltage electrodes and configured to collect the airborne particulate matter charged by the ions by using Coulomb force. The discharge electrodes, the ground electrodes, the high-voltage electrodes, and the collection electrodes are installed on approximately a same plane and in a direction approximately parallel to an airflow direction. The high-voltage electrodes and the collection electrodes each include a conductive member surface-treated by a non-conductive member.

With this configuration, a slim electrostatic precipitator, in which the charging region and the dust collecting region are integrated, may be implemented. In addition, because airborne particulate matter may be charged by using field charging and diffusion charging in the charging region, the amount of charge of airborne particulate matter may be increased. In addition, because the charged airborne particulate matter flow downstream in the ventilation direction by fountain flow, airborne particulate matter may be collected by fountain flow in a structure in which the charging region and the dust collecting region are arranged on the same plane. Furthermore, because the high-voltage electrode and the collection electrode are surface-treated with a non-conductive member, a spark discharge may be avoided even when the collection electrode and the high-voltage electrode are arranged adjacent to the discharge electrode, so that a stable discharge is possible between the ground electrode and the discharge electrode. Accordingly, a spark discharge may be avoided without changing the arrangement interval between the electrodes, thereby suppressing the deterioration of the dust collection effect.

In an embodiment of the disclosure, the discharge electrodes, the ground electrodes, the high-voltage electrodes, and the collection electrodes may be arranged along a direction perpendicular to the airflow direction.

In an embodiment of the disclosure, the discharge electrodes, the ground electrodes, the high-voltage electrodes, and the collection electrodes may be spaced apart from each other in a direction perpendicular to the airflow direction so that the air passes between two adjacent electrodes.

In an embodiment of the disclosure, two adjacent charging electrodes among the plurality of charging electrodes may be the discharge electrode and the ground electrode or may be two ground electrodes.

In an embodiment of the disclosure, at least one of the high-voltage electrodes and at least one of the collection electrodes may be arranged in at least one of a plurality of ranges defined by the plurality of charging electrodes so that the high-voltage electrode is not adjacent to the discharge electrode

In an embodiment of the disclosure, the plurality of ranges may include a range between two charging electrodes and ranges outside the charging electrodes arranged at both ends in an arrangement direction of the plurality of charging electrodes.

In an embodiment of the disclosure, at least one of the high-voltage electrodes and at least one of the collection electrodes may be arranged in all the plurality of ranges defined by the plurality of charging electrodes.

In an embodiment of the disclosure, the high-voltage electrode and the collection electrode may be arranged only in one of two adjacent ranges among the plurality of ranges.

In an embodiment of the disclosure, two high-voltage electrodes may not be adjacent to each other within the plurality of ranges.

In an embodiment of the disclosure, the ground electrode may include at least one of a flat plate-shaped member or a rod-shaped member.

In an embodiment of the disclosure, the discharge electrode may include at least one of a needle-shaped conductive member, a saw-toothed conductive member, or a plurality of fiber-shaped conductive members.

An air purifier according to an aspect of the disclosure includes an electrostatic precipitator configured to remove airborne particulate matter before discharging sucked air into an air purifying space. The electrostatic precipitator includes a plurality of charging electrodes including ground electrodes and discharge electrodes and configured to generate ions by corona discharge to charge the airborne particulate matter and a plurality of dust collection electrodes including collection electrodes and high-voltage electrodes and configured to collect the airborne particulate matter charged by the ions by using Coulomb force. The discharge electrodes, the ground electrodes, the high-voltage electrodes, and the collection electrodes are installed on approximately a same plane and in a direction approximately parallel to an airflow direction. The high-voltage electrodes and the collection electrodes each include a conductive member surface-treated by a non-conductive member.

In an embodiment of the disclosure, the discharge electrodes, the ground electrodes, the high-voltage electrodes, and the collection electrodes may be spaced apart from each other in a direction perpendicular to the airflow direction so that air passes between two adjacent electrodes. Two adjacent charging electrodes among the plurality of charging electrodes may be the discharge electrode and the ground electrode or may be two ground electrodes. At least one of the high-voltage electrodes and at least one of the collection electrodes may be arranged in at least one of a plurality of ranges defined by the plurality of charging electrodes so that the high-voltage electrode is not adjacent to the discharge electrode.

In an embodiment of the disclosure, at least one of the high-voltage electrodes and at least one of the collection electrodes may be arranged in all the plurality of ranges defined by the plurality of charging electrodes.

In an embodiment of the disclosure, the high-voltage electrode and the collection electrode may be arranged only in one of two adjacent ranges among the plurality of ranges.

An electrostatic precipitator according to an embodiment of the disclosure includes a plurality of charging electrodes including ground electrodes and discharge electrodes and configured to generate ions by corona discharge to charge airborne particulate matter and a plurality of dust collection electrodes including collection electrodes and high-voltage electrodes and configured to collect the airborne particulate matter charged by the ions by using Coulomb force. The discharge electrodes, the ground electrodes, the high-voltage electrodes, and the collection electrodes may be installed on approximately a same plane and in a direction approximately parallel to an airflow direction. The high-voltage electrodes and the collection electrodes each include a conductive member surface-treated by a non-conductive member.

In an embodiment of the disclosure, the discharge electrodes, the ground electrodes, the high-voltage electrodes, and the collection electrodes may be spaced apart from each other in a direction perpendicular to the airflow direction so that air passes between two adjacent electrodes. Two adjacent charging electrodes among the plurality of charging electrodes may be the discharge electrode and the ground electrode or may be two ground electrodes. At least one of the high-voltage electrodes and at least one of the collection electrodes may be arranged in at least one of a plurality of ranges defined by the plurality of charging electrodes so that the high-voltage electrode is not adjacent to the discharge electrode.

In an embodiment of the disclosure, at least one of the high-voltage electrodes and at least one of the collection electrodes may be arranged in all the plurality of ranges defined by the plurality of charging electrodes.

In an embodiment of the disclosure, the high-voltage electrode and the collection electrode may be arranged only in one of two adjacent ranges among the plurality of ranges.

In an embodiment of the disclosure, two high-voltage electrodes may not be adjacent to each other within the plurality of ranges.

The technical effects to be achieved by the disclosure are not limited to those described above, and other technical effects that are not mentioned herein will be clearly understood by those of ordinary skill in the art from the description of the disclosure.

As described above, although the air conditioner, the air purifier, and the electrostatic precipitator of the disclosure have been described by limited embodiments of the disclosure and drawings, the disclosure is not limited to the above-described embodiments of the disclosure, and various modifications are possible without departing from the scope thereof.

## Claims

1. An air conditioner comprising:
an indoor heat exchanger (201) configured to perform heat exchange with air sucked in from an air conditioning space; and
an electrostatic precipitator (10) configured to remove airborne particulate matter before discharging the air into the air conditioning space,
wherein the electrostatic precipitator comprises:
a plurality of charging electrodes (11) comprising ground electrodes (11A) and discharge electrodes (11B) and configured to generate ions by corona discharge to charge the airborne particulate matter; and
a plurality of dust collection electrodes (12) comprising collection electrodes (12a) and high-voltage electrodes (12b) and configured to collect the airborne particulate matter charged by the ions by using Coulomb force,
the discharge electrodes, the ground electrodes, the high-voltage electrodes, and the collection electrodes are installed on approximately a same plane and in a direction approximately parallel to an airflow direction, and
the high-voltage electrodes and the collection electrodes each comprise a conductive member (121) surface-treated by a non-conductive member (122).

2. The air conditioner of claim 1, wherein the discharge electrodes, the ground electrodes, the high-voltage electrodes, and the collection electrodes are arranged along a direction perpendicular to the airflow direction.

3. The air conditioner of claim 1 or 2, wherein the discharge electrodes, the ground electrodes, the high-voltage electrodes, and the collection electrodes are spaced apart from each other in a direction perpendicular to the airflow direction so that the air passes between two adjacent electrodes.

4. The air conditioner of any one of claims 1 to 3, wherein two adjacent charging electrodes among the plurality of charging electrodes are the discharge electrode and the ground electrode or are two ground electrodes.

5. The air conditioner of claim 4, wherein at least one of the high-voltage electrodes and at least one of the collection electrodes are arranged in at least one of a plurality of ranges defined by the plurality of charging electrodes so that the high-voltage electrode is not adjacent to the discharge electrode.

6. The air conditioner of claim 5, wherein the plurality of ranges comprise a range between two charging electrodes and ranges outside the charging electrodes arranged at both ends in an arrangement direction of the plurality of charging electrodes.

7. The air conditioner of claim 5 or 6, wherein at least one of the high-voltage electrodes and at least one of the collection electrodes are arranged in all the plurality of ranges defined by the plurality of charging electrodes.

8. The air conditioner of claim 5 or 6, wherein the high-voltage electrode and the collection electrode are arranged only in one of two adjacent ranges among the plurality of ranges.

9. The air conditioner of any one of claims 5 to 8, wherein two high-voltage electrodes are not adjacent to each other within the plurality of ranges.

10. The air conditioner of any one of claims 1 to 9, wherein the ground electrode comprises at least one of a flat plate-shaped member or a rod-shaped member.

11. The air conditioner of any one of claims 1 to 10, wherein the discharge electrode comprises at least one of a needle-shaped conductive member, a saw-toothed conductive member, or a plurality of fiber-shaped conductive members.

12. An air purifier comprising
an electrostatic precipitator (10) configured to remove airborne particulate matter before discharging sucked air into an air purifying space,
wherein the electrostatic precipitator comprises:
a plurality of charging electrodes (11) comprising ground electrodes (11A) and discharge electrodes (11B) and configured to generate ions by corona discharge to charge the airborne particulate matter; and
a plurality of dust collection electrodes (12) comprising collection electrodes (12a) and high-voltage electrodes (12b) and configured to collect the airborne particulate matter charged by the ions by using Coulomb force,
the discharge electrodes, the ground electrodes, the high-voltage electrodes, and the collection electrodes are installed on approximately a same plane and in a direction approximately parallel to an airflow direction, and
the high-voltage electrodes and the collection electrodes each comprise a conductive member (121) surface-treated by a non-conductive member (122).

13. The air purifier of claim 12, wherein the discharge electrodes, the ground electrodes, the high-voltage electrodes, and the collection electrodes are spaced apart from each other in a direction perpendicular to the airflow direction so that air passes between two adjacent electrodes,
two adjacent charging electrodes among the plurality of charging electrodes are the discharge electrode and the ground electrode or are two ground electrodes, and
at least one of the high-voltage electrodes and at least one of the collection electrodes are arranged in at least one of a plurality of ranges defined by the plurality of charging electrodes so that the high-voltage electrode is not adjacent to the discharge electrode.

14. The air purifier of claim 13, wherein at least one of the high-voltage electrodes and at least one of the collection electrodes are arranged in all the plurality of ranges defined by the plurality of charging electrodes.

15. The air purifier of claim 13, wherein the high-voltage electrode and the collection electrode are arranged only in one of two adjacent ranges among the plurality of ranges.
